Europäisches Patentamt

European Patent Office

Office européen des brevets

(11) Veröffentlichungsnummer : **0 080 745**
**B1**

## (12) EUROPÄISCHE PATENTSCHRIFT

(45) Veröffentlichungstag der Patentschrift :
09.10.85

(51) Int. Cl.⁴ : **F 01 D 25/24**

(21) Anmeldenummer : **82201311.6**

(22) Anmeldetag : **21.10.82**

(54) Verstellanordnung für ein fixiertes Maschinenteil.

(30) Priorität : **27.11.81 CH 7607/81**

(43) Veröffentlichungstag der Anmeldung :
**08.06.83 Patentblatt 83/23**

(45) Bekanntmachung des Hinweises auf die Patenterteilung : **09.10.85 Patentblatt 85/41**

(84) Benannte Vertragsstaaten :
**CH DE FR GB LI**

(56) Entgegenhaltungen :
**DE-C- 395 865**
**DE-C- 441 710**
**FR-A- 2 042 191**
**FR-A- 2 316 467**
**GB-A- 542 197**
**US-A- 3 892 500**

(73) Patentinhaber : **BBC Aktiengesellschaft Brown, Boveri & Cie.**
**Haselstrasse**
**CH-5401 Baden (CH)**

(72) Erfinder : **Schwarz, Hans**
**Rinikerstrasse 62**
**CH-5222 Umiken (CH)**

# Beschreibung

Die Erfindung betrifft eine Verstellanordnung für ein in einem ersten Maschinenteil beweglich fixiertes zweites Maschinenteil gemäss Oberbegriff des Patentanspruchs 1.

Derartige Maschinenteile kommen insbesondere im Turbomaschinenbau vor, in welchem im Maschinengehäuse eingehängte Schaufelträger zu verstellen sind. Es geht hier einmal um die Einstellung bei Erstmontage und zum andern darum, bei Wellenverschiebungen den Schaufelträger nachzuführen, um das radiale Schaufelspiel möglichst klein und über dem Umfang gleichförmig zu halten. Bisher wurden hierfür Keilverstellungen angewendet, zu deren Justierung das Gehäuseoberteil der Turbomaschine abgedeckt werden musste.

Eine Verstellanordnung der eingangs genannten Art ist bekannt aus der FR-A-2 316 467. Es handelt sich hierbei um Keilverstellungen, bei denen das Gehäuseoberteil jedoch nicht abgedeckt werden muss. Das zu verstellende Maschinenteil ist in einer gleichen Vertikalebene an seinem äusseren Umfang mit zwei symmetrisch zur Vertikalachse verlaufenden, radialen Ausnehmungen versehen, deren Mittellinien mit der Horizontalachse des zu verstellenden Maschinenteils einen Winkel einschliessen. Das äussere, nicht zu verstellende Maschinenteil ist in der gleichen Vertikalebene mit zwei nichtradialen Ausnehmungen versehen. Beide Maschinenteile sind über abgekröpfte, in den Ausnehmungen gleitbare Einstellkeile verbunden und gegeneinander einstellbar, wobei die Mittellinie des in die radiale Ausnehmung eingreifenden Teils des Einstellkeils mit der Mittellinie des in der nichtradialen Ausnehmung geführten Teils des Einstellkeils einen Winkel einschliesst. Wird eine rein vertikale Verschiebung des unzugänglichen Maschinenteils angestrebt, so müssen beide Keile um den gleichen Betrag in entgegengesetzter Richtung verstellt werden, und zwar je nach gewünschter Anhebung oder Absenkung des Pfeils gleiten sie in den Ausnehmungen des zugänglichen Teils beide nach innen resp. nach aussen.

Diese Lösung ist nicht anwendbar bei Maschinenteilen, die relativ zueinander Längsbewegungen in Achsrichtung ausführen.

Der im Kennzeichen des Patentanspruch 1 definierten Erfindung liegt die Aufgabe zugrunde, eine Vorrichtung zu schaffen, in der ein unzugänglich eingespanntes Maschinenteil mindestens in einer Richtung verstellt werden kann, wobei Relativbewegungen zwischen den Maschinenteilen zuzulassen sind.

In der Zeichnung ist ein Ausführungsbeispiel der Erfindung schematisch dargestellt, wobei es sich beim ersten Maschinenteil um ein in der Trennebene verschraubtes Turbinengehäuse handelt und beim eingespannten Maschinenteil um den im Gehäuse eingehängten Schaufelträger.

Es zeigen:

Figur 1 einen teilweisen Schnitt durch eine Schaufelträgerfixierung;

Figur 2 einen Querschnitt nach Linie A-A in Fig. 1 in vergrössertem Massstab.

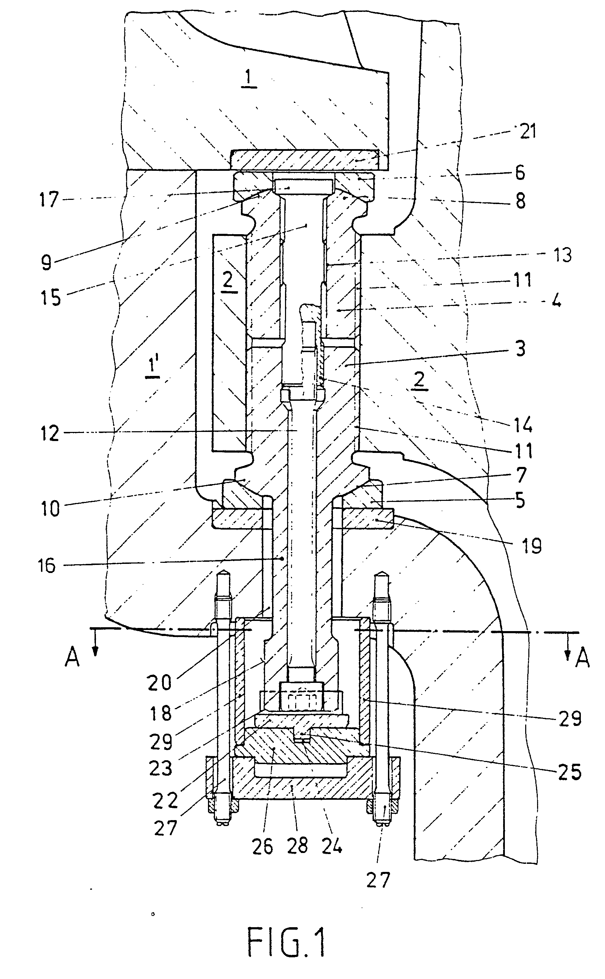

Das in Fig. 1 gezeigte Turbomaschinengehäuse besteht aus einem mit einem Gehäuseoberteil 1 verschraubten Gehäuseunterteil 1', in denen ein in der Höhe zu verstellender Schaufelträger 2 fest abgestützt ist. Die Höhenverstellung erfolgt über eine von ausserhalb des Gehäuses 1' zu betätigende Stellschraube 3, welche in ein vertikales Gewinde 11 im Schaufelträger 2 eingeschraubt ist. Das Schaufelträgergewicht wird über das Gewinde 11 in die Stellschraube 3 eingeleitet und auf das Gehäuseunterteil 1' übertragen. Dies geschieht über ihr verdicktes Kopfende 10 mit einer entsprechend bemessenen Auflagefläche 7, welche sphärisch ausgebildet ist und in einer sich am Gehäuseunterteil 1' abstützenden Pfanne 5 drehbar gelagert ist. Die Pfannenabstützung geschieht dabei über eine gleitfähige Unterlage 19. Die Stellschraube 3 ist mit einem Schaft 16 versehen, der durch die Pfanne 5 und eine Bohrung 20 am Gehäuseunterteil 1' hindurchragt und an seinem Ende zwecks Anbringen eines Werkzeugs profiliert ist. Vorzugsweise werden hier abgeflachte Flächen angebracht; im vorliegenden Fall ist dies ein Sechskantkopf 18.

Eine multifunktionale Verschlusskappe für das herausragende Schaftende ist vorgesehen, womit

die Stellschraube 3 gegen Verdrehung gesichert ist;

das Entweichen vom Arbeitsmittel aus dem Gehäuseinnern über die Durchgangsbohrung 20 für den Schraubenschaft 16 vermieden wird und

Querbewegungen der Stellschraube zugelassen sind, unabhängig von ihrer jeweiligen Drehwinkellage, welche sich durch unterschiedliche Stellung der Schlüsselflächen des Sechskantes 18 ausdrückt.

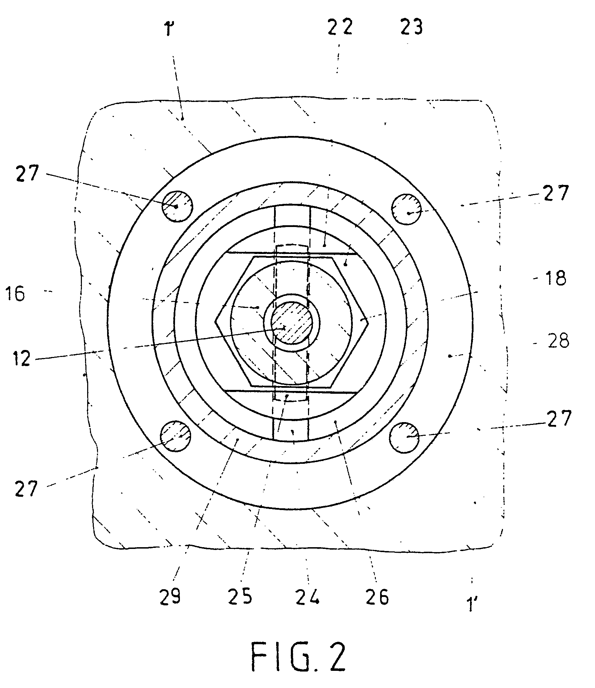

Um all dies zu erreichen, werden 2 gegenüberliegende Flächen des Sechskantes 18 mit seitlichem Spiel in einer Nut 23 geführt, welche in eine Scheibe 22 eingearbeitet ist. Die Nut ist in Fig. 2 erkennbar, in der die gleichen Teile mit demselben Bezugszeichen versehen sind wie in Fig. 1. Dieselbe Scheibe 22 ist an ihrer dem Schaftende abgekehrten Seite mit einer Längsrippe 125 versehen, die sich rechtwinkelig zur Nut 23 erstreckt. Mit Spiel wird diese Rippe 21 in einer entsprechend bemessenen Nut 24 in einem Deckel 26 geführt. Dieser Deckel 26 gewährleistet den druckdichten Abschluss zusammen mit einer ringsum verschlossenen, am Gehäuseunterteil 1' anliegenden Hülse 29. Diese Hülse 29 übt gleichzeitig die Funktion eines Distanzelementes aus und ist so bemessen, dass die Stellschraube 3 und die Scheibe 22 in ihren jeweiligen Nuten 23 resp. 24 kreuzschlittenartig beweglich sind. Mit einem am Deckel 26 anliegenden Flansch 28 und Schrauben 27 wird die Verschlusskappe verdrehsicher am Gehäuseunterteil 1' verspannt.

Das blosse Abstützen des Schaufelträgers 2 auf dem Gehäuseunterteil 1' reicht nicht aus, um betrieblich bedingte Verschiebungen dieser Elemente gegeneinander und das auf den Schaufelträger einwirkende Drehmoment aufzunehmen. Hierzu muss der Schaufelträger 2 in der Vertikalen auch nach oben fixiert werden.

Als nächste Lösung würde sich die blosse Verlängerung der Stellschraube anbieten, die sich dann während des Warmbetriebes der Maschine ebenfalls über ballige Flächen in Pfanen am Gehäuseoberteil 1 abstützt. Eine derartige Ausbildung hätte allerdings zur Folge, dass

die Auflagefläche auf den Schraubendurchmesser beschränkt ist da die Schraube von der unteren Seite den Schaufelträger durchdringt. Der Schraubendurchmesser ist somit entsprechend gross zu wählen. Dies wiederum hat ein grosses Verstelldrehmoment der mit dem Schaufelträgergewicht belasteten Stellschraube zur Folge und vergrössert den für die Aufnahme der Schraube benötigten Gussansatz am Schaufelträger;

dass betriebliche Vibrationen das tragende Gewinde, welches zwangsläufig ein gewisses Spiel aufweisen muss, beschädigen kann;

und dass — da die Länge der zwischen oberen und unteren Pfanne eingespannten Schraube nicht auf das erforderliche Mass genau herstellbar ist — mit Beilagen gearbeitet werden muss, deren Unzugänglichkeit bei geschlossener Maschine nicht zu befriedigen vermag.

Hinsichtlich aller genannten Folgen schafft nun die Erfindung Abhilfe. Die eigentliche Stellschraube wird mit gleichem Gewinde 11 zweiteilig ausgeführt. Bei abgehobenen Gehäuseoberteil 1 und eingehängtem Schaufelträger 2 — in den der untere Teil 3 der Stellschraube vorgängig eingeschraubt wurde — wird in den zugänglichen Teil des Schaufelträgers 2 das Schraubenoberteil 4 eingeführt. Dieses Oberteil 4 ist an ihrem verdickten Kopfende 8 mit einer Auflagefläche 9 versehen, die gleich dimensioniert ist wie jene des Schraubenunterteils 3 und wie diese in einer sich am aufzulegenden Gehäuseoberteil 1 abstützenden Pfanne 6 gelagert ist. Auch hier stützt sich die Pfanne 6 auf einer gleitfähigen Unterlage 21 ab. Diese Zweiteiligkeit gestattet zum einen, dass der Durchmesser der Stellschrauben 3, 4 gegenüber dem erforderlichen Durchmesser der Auflageflächen 7, 9 erheblich reduziert werden kann und zum andern, dass die benötigte Gesamtlänge der gegeneinander zu verdrehenden Stellschrauben 3, 4 genau einstellbar ist.

Die Drehverbindung der beiden Schraubenteile 3, 4 erfolgt über zwei Kerbverzahnungen 13, 14 eines Bolzens 15, der das hohle Schraubenoberteil 4 durchdringt und an dessen oberem Ende mit verdicktem Kopf 17 anliegt, und der in das ebenfalls hohle Schraubenunterteil 3 hineinragt. Der verzahnte Bolzen 15 ist je mit einer entsprechenden Verzahnung im Schraubenoberteil (13) und im Schraubenunterteil (14) im Eingriff. Um nun anlässlich der Montage ein feinstufiges Verdrehen der Schraubenteile 3, 4 gegeneinander zu ermöglichen — was die präzise Längeneinstellung bewirkt — werden für die beiden Kerbverzahnungen 13, 14 unterschiedliche Teilungen gewählt. Werden beispielsweise für die Verzahnung 13 im Schraubenoberteil siebenunddreissig Zähne vorgesehen und für jene (14) im Schraubenunterteil sechsunddreissig Zähne, so rasten die beiden Verzahnungen bereits bei einer Winkeldrehung von 0,27° ein.

Ueber die derart drehverbundenen Schraubenteile 3, 4 kann nun auch bei montiertem Gehäuseoberteil 1 durch Verdrehen des Sechskantes 18 der Schaufelträger 2 höher oder tiefer verstellt werden.

Um schwingungsbedingte Gewindeschäden zu vermeiden, werden die beiden Schraubenteile nach erfolgter Höheneinstellung axial miteinander verspannt. Hierzu ist in das ins Unterteil 3 hineinragende Bolzenende ein nicht bezeichnetes Gewinde eingeschnitten, in das eine Dehnschraube 12 eingeschraubt ist. Diese Dehnschraube 12 ist durch das hohle Schraubenunterteil 3 eingebracht. Ihr mit Innensechskant versehener Kopf ist im Sechskant 18 des Schraubenschafts 16 versenkt angeordnet und zwar derart, dass sie mögliche Querbewegungen des Schaftes in der Nut 23 nicht beeinträchtigt.

Neben der äusseren Eingriffsmöglichkeit sind die Vorteile der Erfindung kurz zusammengefasst darin zu sehen, dass für die kombinierte Fixierung und Höhenverstellbarkeit des Schaufelträgers ein geringer Platzbedarf vorliegt, der entsprechend kleine und somit thermisch weniger beanspruchte Angüsse am Schaufelträger zur Folge hat. Trotz dieses geringen Platzbedarfs können die für die Kraftübertragung auf das Gehäuse erforderlichen Flächen bereitgestellt werden, wobei sich die sphärischen, vorzugsweise kugeligen Flächen als besonders günstig erweisen, da sie Herstellungsungenauigkeiten zu kompensieren vermögen. Sofern derartige Einrichtungen beidseitig des Schaufelträgers angewendet werden, können sie auch Ungenauigkeiten aus unterschiedlicher Höheneinstellung ausgleichen.

**Patentansprüche**

1. Verstellanordnung für ein in einem ersten Maschinenteil (1, 1') beweglich fixierten zweiten Maschinenteil (2), wobei die Fixierung unzugänglich ist, und wobei ein am verdickten Ende (10) eines Schraubenteils (3) angeordneter Schaft (16) zur Drehung der Stellschraube (3, 4) aus dem ersten Maschinenteil (1') herausragt, dadurch gekennzeichnet, dass das zweite Maschinenteil (2) mittels einer zweiteiligen Stellschraube (3, 4) verstellt wird, deren beide Teile mit je einem Ende in ein gemeinsames Schraubgewinde (11) des zweiten Maschinenteils (2) eingeschraubt sind und miteinander drehfest verbunden sind, und die sich über ihr anderes, verdicktes Ende (8 resp. 10) am ersten Maschinenteil (1 resp. 1') abstützt.

2. Verstellanordnung nach Anspruch 1, dadurch gekennzeichnet, dass die drehfeste Verbindung beider Schraubenteile (3, 4) über zwei Kerbverzahnungen (13, 14) vorgenommen wird, die sowohl in den hohlen Schraubenteilen (3, 4) als auch an einem die hohlen Schraubenteile durchdringenden Bolzen (15) angeordnet sind.

3. Verstellanordnung nach Anspruch 2, dadurch gekennzeichnet, dass die zwei Kerbverzahnungen (13, 14) unterschiedliche Teilung aufweisen.

4. Verstellanordnung nach Anspruch 2, dadurch gekennzeichnet, dass die drehfest miteinander verbundenen Schraubenteile mit einer den hohlen Schaft (16) des einen Schraubenteils (3) durchdringenden Schraube (12), welche im Bolzen (15) eingeschraubt ist, axial gegeneinander verspannt sind.

5. Verstellanordnung nach Anspruch 1, dadurch gekennzeichnet, dass die verdickten Enden (8, 10) der Schraubenteile (4, 3) sphärische Auflageflächen (9, 7) aufweisen, die in sich am ersten Maschinenteil (1, 1') abstützenden Pfannen (6, 5) gelagert sind.

6. Verstellanordnung nach Anspruch 1, dadurch gekennzeichnet, dass der aus dem ersten Maschinenteil (1') herausragende Schaft (16) mit einer druckdichten Verschlusskappe umgeben ist, deren Dichtelemente im wesentlichen aus einem drehfesten Deckel (26) und einer ringsum geschlossenen, am ersten Maschinenteil (1') anliegenden Hülse (29) bestehen.

7. Verstellanordnung nach Anspruch 6, dadurch gekennzeichnet, dass der aus dem ersten Maschinenteil (1') herausragende Schaft (16) abgeflachte Endflächen aufweist, die in einer Nut (23) einer am Deckel (26) drehfest anliegenden Scheibe (22) geführt sind und so gegen Verdrehung gesichert ist.

8. Verstellanordnung nach Anspruch 1, dadurch gekennzeichnet, dass der aus dem ersten Maschinenteil (1') herausragende Schaft (16) abgeflachte Endflächen aufweist, die in einer Nut (23) einer Scheibe (22) geführt sind, wobei die Scheibe (22) an ihrer den Schaft (16) abgekehrten Seite eine senkrecht zur Nut (23) verlaufende Rippe (25) aufweist, die in eine Nut (24) eines mit dem ersten Maschinenteil (1') drehfest verbundenen Deckels (26) eingreift.

9. Verstellanordnung nach Anspruch 8, dadurch gekennzeichnet, dass sowohl die abgeflachten Endflächen des Schaftes (16) als auch die Rippe (25) mit einer Spielpassung in ihrer jeweiligen Nut (23 resp. 24) einliegen.

## Claims

1. Adjusting arrangement for a second machine part (2) movably fixed in a first machine part (1, 1'), with the fixing being inaccessible, and with a shaft (16) for turning the adjusting screw (3, 4) out of the first machine part (1') projecting at the thickened end (10) of a screw part (3), characterised in that the second machine part (2) is adjusted by means of a two-piece adjusting screw (3, 4), the two parts of which, with one end each, are screwed into a common screw thread (11) of the second machine part (2) and are connected non-rotationally with one another and are supported at the first machine part (1 and 1' respectively) by their other, thickened end (8 and 10 respectively).

2. Adjusting arrangement according to Claim 1, characterised in that the two screw parts (3, 4) are non-rotationally connected by two serrations (13, 14) which are arranged both in the hollow screw parts (3, 4) and on a pin (15) which penetrates through the hollow screw parts.

3. Adjusting arrangement according to Claim 2, characterised in that the two serrations (13, 14) have different spacing.

4. Adjusting arrangement according to Claim 2, characterised in that the screw parts connected non-rotationally with one another are axially braced against one another by a screw (12) which penetrates through the hollow shaft (16) of one screw part (3) and is screwed into the pin (15).

5. Adjusting arrangement according to Claim 1, characterised in that the thickened ends (8, 10) of the screw parts (4, 3) have spherical seating surfaces (9, 7) which are mounted in sockets (6, 5) supported on the first machine part (1, 1').

6. Adjusting arrangement according to Claim 1, characterised in that the shaft (16) which projects out of the first machine part (1') is enclosed by a pressure-tight sealing cap, the sealing elements of which essentially consist of a non-rotational cover (26) and a sleeve (29) which is closed all round and sits against the first machine part (1').

7. Adjusting arrangement according to Claim 6, characterised in that the shaft (16) projecting out of the first machine part (1') has flattened end surfaces which are guided in a groove (23) of a disc (22), which is non-rotationally arranged on the cover (26), and is thus secured against rotation.

8. Adjusting arrangement according to Claim 1, characterised in that the shaft (16) projecting out of the first machine part (1') has flattened end surfaces which are guided in a groove (23) of a disc (22), with the disc (22), on its side facing away from the shaft (16), having a rib (25) which runs at right angles to the groove (23) and engages in a groove (24) of a cover (26) which is non-rotationally connected to the first machine part (1').

9. Adjusting arrangement according to Claim 8, characterised in that both the flattened end surfaces of the shaft (16) and the rib (25) sit in their respective groove (23 and 24 respectively) with a clearance fit.

## Revendications

1. Dispositif d'ajustement pour une seconde partie de machine (2) fixée de façon mobile dans une première partie de machine (1, 1'), la fixation étant inaccessible et une tige (16), disposée à l'extrémité épaissie (10) d'une partie de vis (3), étant prévue pour faire tourner la vis de réglage (3, 4) et faisant saillie sur la première partie de machine (1'), caractérisé en ce que la seconde partie de machine (2) est ajustée au moyen d'une vis de réglage (3, 4) en deux parties dont les deux parties sont vissées chacune par une extrémité dans un taraudage commun (11) de la seconde partie de machine (2), sont reliées rigidement l'une à l'autre et prennent appui sur la première partie de machine (1, 1') par l'intermédiaire de leur autre extrémité épaissie (8, 10).

2. Dispositif d'ajustement suivant la revendication 1, caractérisé en ce que la liaison rigide des deux parties de vis (3, 4) est établie par l'intermédiaire de deux couronnes de cannelures (13, 14) qui sont prévues à la fois dans les parties de vis creuses (3, 4) et sur une broche (15) qui traverse les parties de vis creuses.

3. Dispositif d'ajustement suivant la revendication 2, caractérisé en ce que les deux couronnes de cannelures (13, 14) présentent des pas différents.

4. Dispositif d'ajustement suivant la revendication 2, caractérisé en ce que les parties de vis reliées rigidement l'une à l'autre sont précontraintes axialement l'une vers l'autre au moyen d'une vis (12) traversant la tige creuse (16) de la première partie de vis (3) et se vissant dans la broche (15).

5. Dispositif d'ajustement suivant la revendication 1, caractérisé en ce que les extrémités épaissies (8, 10) des parties de vis (4, 3) présentent des surfaces d'appui sphériques (9, 7) qui sont montées dans des coussinets (6, 5) prenant appui sur la première partie de machine (1, 1').

6. Dispositif d'ajustement suivant la revendication 1, caractérisé en ce que la tige (16) faisant saillie sur la première partie de machine (1') est entourée par une coiffe de fermeture étanche à la pression dont les éléments d'étanchéité sont formés essentiellement d'un couvercle (26) fixe et d'une douille (29) appliquée sur la première partie de machine (1') et fermée dans le sens circonférentiel.

7. Dispositif d'ajustement suivant la revendication 6, caractérisé en ce que la tige (16) faisant saillie sur la première partie de machine (1') présente des méplats d'extrémité qui sont guidés dans une rainure (23) d'une rondelle (22) posée et calée sur le couvercle (26) et est ainsi empêchée de tourner.

8. Dispositif d'ajustement suivant la revendication 1, caractérisé en ce que la tige (16) qui fait saillie sur la première partie de machine (1') présente des méplats d'extrémité qui sont guidés dans une rainure (23) d'une rondelle (22), la rondelle (22) présentant, du côté opposé à la tige (16), une nervure (25) perpendiculaire à la rainure (23) qui s'engage dans une rainure (24) d'un couvercle (26) relié rigidement à la première partie de machine (1').

9. Dispositif d'ajustement suivant la revendication 8, caractérisé en ce que les méplats d'extrémité de la tige (16) de même que la nervure (25) sont disposés avec un certain jeu dans leurs rainures respectives (23, 24).

FIG.1

FIG. 2